# EUROPEAN PATENT SPECIFICATION

(11) **EP 3 683 493 B1**
(45) Date of publication and mention of the grant of the patent: **08.11.2023**
(21) Application number: 18855905.8
(22) Date of filing: 22.06.2018
(51) Int. Cl.: F21K 9/20, F21V 8/00, B60L 53/30, B60L 53/60, F21V 33/00

(54) **LIGHTING ASSEMBLY, LIGHTING STRUCTURE AND CHARGING PILE**
BELEUCHTUNGSANORDNUNG, BELEUCHTUNGSSTRUKTUR UND LADESÄULE
ENSEMBLE D'ÉCLAIRAGE, STRUCTURE D'ÉCLAIRAGE ET PILE DE CHARGE

(30) Priority: 14.09.2017 CN 201721175552 U
(43) Date of publication of application: 22.07.2020
(73) Proprietor: Nio Co., Ltd., Shanghai 201805 (CN)
(72) Inventor: XIA, Lijian, Shanghai 201805 (CN); YANG, Chao, Shanghai 201805 (CN); ZHAO, Zhiling, Shanghai 201805 (CN); MA, Jun, Shanghai 201805 (CN)
(74) Representative: Vossius & Partner Patentanwälte Rechtsanwälte mbB
(86) International application number: PCT/CN2018/092408
(87) International publication number: WO 2019/052252

(56) References cited:
- EP-A1- 1 467 387
- EP-A1- 1 727 170
- CN-A- 1 929 059
- CN-A- 102 891 510
- CN-A- 106 080 249
- CN-U- 204 707 365
- CN-U- 204 707 365
- CN-U- 205 478 404
- CN-U- 205 478 404
- CN-U- 207 394 389
- KR-A- 20110 085 574
- KR-U- 20130 001 518

## Description

### FIELD OF THE INVENTION

The invention relates to the field of light devices, and specifically to a light assembly and a light structure comprising the light assembly.

The invention also relates to the field of charging piles of new energy automobiles, and specifically to a charging pile comprising the above-described light assembly and/or light structure.

### BACKGROUND OF THE INVENTION

LED lights have been applied in a variety of products. For example, CN 205 478 404 U discloses a fan structure with an LED light assembly. As the development and scale of the new energy automobile industry continues to expand, great development is also obtained in the charging pile industry. The addition of LED lights to the charging pile product may be used to indicate a state of charge, or to improve product appearance and to enhance the sense of science and technology of the product.

At present, there are not many products that use the LED light scheme on the charging pile, and it is common to illuminate the LED light through light transmitting material simply by covering the outside of the LED light source with the light transmitting material. By means of the scheme, only one point or a section of light source can be formed, and a wide range of light effects is difficult to be achieved. In addition, such LED light scheme is at the surface of the product, and can be directly seen visually, the LED light source may be seen even at certain angles, therefore an ideal light effect cannot be achieved, and the sense of science and technology is not strong.

### SUMMARY OF THE INVENTION

The invention provides a light structure as described in independent claim 1. Said light structure comprises a light assembly comprising:
at least one light source;
a light guide which is a flexible extension member and has at least one end which faces the at least one light source, and light emitted from the at least one light source is transmitted within the light guide;
a light transmitting frame on which the at least one light source is supported, the light guide being integrated with the frame, wherein the frame defines an extension path of the light guide.
the light assembly further comprising:
   a body and a front panel, wherein when the body and the front panel are mounted with the light assembly, the light assembly being located between the body and the front panel, and the light guide of the light assembly surrounding the inner periphery of the light structure.

In one embodiment of the light assembly, the light guide is arranged surrounding the edge of the frame and embedded in the frame.

In one embodiment of the light assembly, an inside of the edge of the frame is disposed with a groove for receiving the light guide therein.

In one embodiment of the light assembly, a light plate is disposed at the bottom of the frame, the at least one light source is disposed on the light plate, each of the at least one light source is aligned with the at least one end of the light guide.

In one embodiment of the light assembly, the at least one light source is LED light source; the light guide is a light guide pipe with a starting end and a tailing end; the material of the frame is a light transmitting material.

In one embodiment of the light assembly, the light transmitting material is PC or PMMA.

In one embodiment of the light structure, the light assembly is in threaded connection with the front panel; after the light assembly is mounted to the front panel, the front panel is in a snap-fit connection with the body.

The invention also provides a charging pile on which any of the light structures as described above is disposed.

The light assembly involved in the invention integrates light source and light guide. The light source is inside of the light assembly and the light guide determines the transmission path of the light emitted from the light source within the light guide. The frame determines the extension path of the light guide in the frame and in turn projects light along that extension path. Therefore, the light assembly not only has a good (light source) hiding effect, but can also achieve a wide range of light effect.

To achieve the dual effects described above, the light guide may be arranged surrounding the inner edge of the frame and embedded in the groove along the inner edge of the frame.

The light assembly involved in the invention is also an optical means with high practicability. The light assembly may be conveniently mounted in the light structure, and the light source is hidden inside the light structure, and therefore a wide range light effect and an ideal visual effect may be achieved.

The charging pile using the light assembly and the light structure involved in the invention may form a good light effect on the surface of the charging pile.

Other aspects and features of the invention will become apparent from the following detailed description with reference to the drawings. It is to be understood, however, that the drawings are designed for the purpose of illustration only and not as a limitation of the scope of the invention, as it should be read with reference to the appended claims. It should also to be understood that the drawings are only intended to conceptually illustrate the structures and flows described herein unless otherwise noted, and are not necessarily drawn to scale.

### BRIEF DESCRIPTION OF THE DRAWINGS

The invention will be more fully understood with reference to the following detailed description of the specific embodiments taken in conjunction with the accompanying drawings, in which like reference numerals refer to like elements throughout the views. Wherein:
FIG. 1 is a structural schematic view of one embodiment of a light assembly involved in the invention; and
FIG. 2 is a structural schematic view of one embodiment of a charging pile involved in the invention, which is an exploded view.

### DETAILED DESCRIPTION OF THE EMBODIMENT(S) OF THE INVENTION

In order to assist those skilled in the art to definitely understand the claimed subject matter of the invention, the detailed description of the invention is described in detail below with reference to the accompanying drawings.

The light assembly involved in the invention is applied to a light structure, and the light structure is used on a charging pile. The light assembly contains LED light source inside and can achieve a wide range of light effects. The light assembly is embedded in the light structure such that the light source of the light structure is not visible from the appearance. Therefore, the charging pile not only uses a LED light scheme but also have a wide range of light effects, meanwhile, the light source is hidden within the light structure, so that a good visual effect can be achieved and the sense of science and technology of the product can be improved.

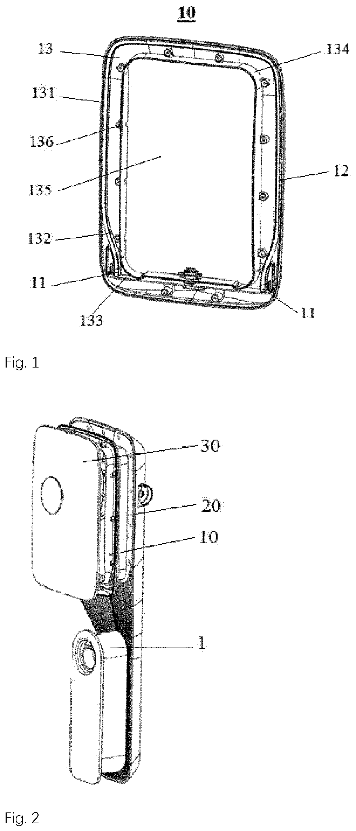

FIG. 1 is a structural schematic view of one embodiment of a light assembly involved in the invention. Referring to FIG. 1, the light assembly 10 includes at least light sources 11, a light guide 12 and a frame 13. The light sources 11 may be the LED light sources as described above or may be other types of light sources. The light guide 12 is flexible and is an extension member. As shown, the light guide 12 has two opening ends, a starting end and a trailing end, facing the light sources 11 respectively, such that light emitted from the light sources 11 may be transmitted between the starting end and the trailing end of the light guide 12. Of course, the light guide may also have only one opening end, while the other end is closed, and the light emitted from the light source at the opened end can also be transmitted in the light guide. The so-called "light guide" is a device that transmits light from one light source to another point at a certain distance from that light source. The light guide 12 may be a light guide pipe or other light guide features known in the art. Generally, the light guide is made of optical materials, and the light rays are transmitted inside the light guide by means of total internal reflection. Since the light guide 12 is flexible, it is not only possible to form one point or a section of light effect with the light guide 12, but also possible to achieve a wider range of light effects by changing the arrangement of the light guide 12. The light guide 12 may be arranged to have an extension path along a straight line, a curve, an arc, or other different shapes. In the illustrated embodiment, the light guide 12 is integrated with the frame 13 which defines the extension path for the light guide 12, and thus further defines a particular transmission path for light rays in the light guide 12. In addition to the light guide 12 and the light sources 11 both being supported on the frame 13, the frame 13 is also a light transmitting frame. It is therefore the light with a transmission path determined in the light guide 12 may further be illuminated out of the frame 13 and may be implemented as an ideal light effect. The frame 13 may be made of a light transmitting material such as PC or PMMA.

With continued reference to FIG. 1, the frame 13 is substantially rectangular in shape. The light guide 12 is arranged around and along the edge 131 of the frame and is embedded in the inside of the frame 13. The light guide 12 substantially surrounds three sides of the four sides of the frame 13, shown as two lateral sides and one top side. Thus light rays can illuminate out of the top and two laterals of the frame 13 through these three sides, thereby achieving a wide range of light effect. The light guide 12 is hidden within the frame 13. Specifically, by use of the inside of the edge 131 of the frame 13, a continuous groove 132 is disposed along one lateral side, the top side, and the other lateral side of the inner edge 131 of the frame 13. The design of the groove 132 takes into account the size of the light guide 12 so that the light guide 12 may snap into the groove 132. Of course, the outline of the frame 13 may not be limited to the rectangular shape mentioned above, but may be other shapes such as circular, oval or square, etc.. The extension (surrounding) path of the light guide 12 is therefore not limited to the illustrated form as long as it is arranged following the edge of the frame 13 and is integrated inside the frame 13.

To arrange the light sources 11, a light plate 133 is disposed at the bottom of the frame 13. The two ends of the light plate 133 are each provided with a light source 11 to respectively align the starting end and the tailing end of the light guide 12. The light source 11 corresponding to the starting end and the light source 11 corresponding to the tailing end are symmetrically arranged on the light plate 133.

In the illustrated embodiment, the number of the light guide 12 is one. The number of light sources 11 is two, corresponding to separately arranged at the starting end and the tailing end of the light guide 12 at two laterals of the frame. It may be contemplated by those skilled in the art that the number of the light guide and the light source are not limited to the number as shown. For example, there may be two light guides and they may be arranged along a path around the inner edge of the frame as described above. The frame is disposed with a plurality of clamping grooves correspondingly. The starting end and the trailing end of each light guide are in alignment with one light source respectively, therefore four light sources are needed. Herein, the so called "in alignment with light source", is intended to maximally transmit the light emitted from the light source within the light guide. Of course, it is clear that as long as the starting end or trailing end of the light guide faces the light source, and the light emitted from each light source transmits by entering the light guide via one end of the light guide, a given transmission path of light ray can be formed according to the given extension path of the light guide. In the above-described manner, the light assembly can achieve the same light effect range as the illustrated embodiment but with a light effect of slightly different form. Additionally, the light sources may be of the same color or of different colors. Furthermore, the light guide is flexible, and the ends of the light guide may always be arranged in alignment with the light source, therefore the light source may be well disposed inside the frame without being exposed. Thereby, those skilled in the art may design a wide range of light effects of different styles by arranging light guides and light sources inside the frame as desired.

The frame 13 is internally disposed with a wall 134 to form a space 135, a plurality of mounting holes 136 are disposed along the wall 134 and the light plate 133. The frame 13 may be connected to other components through these mounting holes 136.

FIG. 2 is an exploded structural schematic view of one embodiment of a charging pile involved in the invention. Referring to FIG. 2, the top of the charging pile 1 employs a light structure, and a light assembly as described above is disposed in the light structure. The light structure includes a body 20, a front panel 30, and a light assembly 10. The body 20 of the light structure is also a part of the body of the charging pile 1. A trademark of the product may be disposed on the front panel 30. The light assembly 10 is located between the front panel 30 and the body 20. When being mounted, the light assembly 10 is first mounted with the front panel 30 through the mounting holes. The mounting holes are also disposed on the front panel 30 corresponding to the mounting holes of the light assembly 10. The light assembly 10 may be fixedly connected with the front panel 30 by screws or other elements with threads. After the light assembly 10 is mounted onto the front panel 30, the front panel 30 is in snap-fit connection with the body 20. After mounting, it may be seen that the light emitted from the LED light sources within the light assembly 10 illuminates out of the left, right and top of the light structure via the light guide and then via the light transmitting frame, thereby forming a rounded wide range of light effects. Since the light sources are hidden within the light assembly 10, the light sources are not visible from the outside of the light structure. Therefore, the light visual effect of the charging pile is improved.

In addition to the light assembly applied to the light structure of the charging pile comprising the front panel and the body, those skilled in the art will contemplate that the light assembly involved in the invention may also be applied to the light structures of other products. Due to the fact that the light assembly integrates the light sources and the light guide, the light assembly with the concept of the invention, with proper modification performed, may be combined with other products or structures in need of the use of the light scheme, and the purpose of a wide range of light effect and improving the visual effect due to the hiding of the light source can be achieved.

While specific embodiments of the invention have been shown and described in detail to explain the principles of the invention, it should be understood that the invention may be implemented otherwise without departing from such principles.

## Claims

1. A light structure comprising:
a light assembly (10) comprising:
at least one light source (11);
a light guide (12) which is a flexible extension member and has at least one end which faces the at least one light source (11), and light emitted from the at least one light source is transmitted within the light guide (12); and
a body (20); and
a front panel (30), **characterized in that**
the light assembly further comprises a light transmitting frame (13) on which the at least one light source (11) is supported, the light guide (12) being integrated with the frame (13), wherein the frame (13) defines an extension path of the light guide (12); and
wherein when the body (20) and the front panel (30) are mounted with the light assembly (10), the light assembly (10) being located between the body (20) and the front panel (30), and the light guide (12) of the light assembly (10) surrounding the inner periphery of the light structure.

2. The light structure of claim 1, wherein: the light assembly (10) is in threaded connection with the front panel (30); after the light assembly (10) is mounted to the front panel (30), the front panel (30) is in a snap-fit connection with the body (20).

3. The light structure of claim 1, wherein: the light guide (12) is arranged surrounding the edge (131) of the frame (13) and embedded in the frame (13).

4. The light structure of claim 3, wherein an inside of the edge (131) of the frame (13) is disposed with a groove (132) for receiving the light guide (12) therein.

5. The light structure of any one of the claims 1 to 4, wherein: a light plate (133) is disposed at the bottom of the frame (13), the at least one light source (11) is disposed on the light plate (133), each of the at least one light source (11) is aligned with the at least one end of the light guide (12).

6. The light structure (10) of claim 5, wherein: the at least one light source (11) is LED light source; the light guide (12) is a light guide pipe with a starting end and a tailing end; the material of the frame (13) is a light transmitting material.

7. The light structure (10) of claim 6, wherein: the light transmitting material is PC or PMMA.

8. A charging pile on which the light structure of any one of claims 1 to 7 is disposed.

## Patentansprüche

1. Lichtstruktur, die Folgendes aufweist:
eine Lichtbaugruppe (10), die Folgendes aufweist:
wenigstens eine Lichtquelle (11);
einen Lichtleiter (12), der ein flexibles Erweiterungselement ist und wenigstens ein Ende aufweist, das der wenigstens einen Lichtquelle (11) zugewandt ist, und wobei von der wenigstens einen Lichtquelle emittiertes Licht innerhalb des Lichtleiters (12) transmittiert wird; und
einen Körper (20); und
eine Frontblende (30), **dadurch gekennzeichnet, dass** die Lichtbaugruppe ferner einen Lichttransmissionsrahmen (13) aufweist, auf dem die wenigstens eine Lichtquelle (11) gestützt ist, wobei der Lichtleiter (12) mit dem Rahmen (13) integriert ist, wobei der Rahmen (13) einen Erweiterungspfad des Lichtleiters (12) definiert; und
wobei, wenn der Körper (20) und die Frontblende (30) mit der Lichtbaugruppe (10) montiert sind, sich die Lichtbaugruppe (10) zwischen dem Körper (20) und der Frontblende (30) befindet und der Lichtleiter (12) der Lichtbaugruppe (10) die Innenperipherie der Lichtstruktur umgibt.

2. Lichtstruktur nach Anspruch 1, wobei: sich die Lichtbaugruppe (10) in einer Gewindeverbindung mit der Frontblende (30) befindet; nachdem die Lichtbaugruppe (10) an die Frontblende (30) montiert wurde, sich die Frontblende (30) in einer Schnappverbindung mit dem Körper (20) befindet.

3. Lichtstruktur nach Anspruch 1, wobei: der Lichtleiter (12) den Rand (131) des Rahmens (13) umgebend und in dem Rahmen (13) eingebettet angeordnet ist.

4. Lichtstruktur nach Anspruch 3, wobei eine Innenseite des Randes (131) des Rahmens (13) mit einer Kerbe (132) zum Aufnehmen des Lichtleiters (12) darin versehen ist.

5. Lichtstruktur nach einem der Ansprüche 1 bis 4, wobei: eine Lichtplatte (133) auf der Unterseite des Rahmens (13) angeordnet ist, die wenigstens eine Lichtquelle (11) auf der Lichtplatte (133) angeordnet ist, jede der wenigstens einen Lichtquelle (11) mit dem wenigstens einen Ende des Lichtleiters (12) ausgerichtet ist.

6. Lichtstruktur (10) nach Anspruch 5, wobei: die wenigstens eine Lichtquelle (11) eine LED-Lichtquelle ist; der Lichtleiter (12) ein Lichtleiterrohr mit einem Startende und einem Schlussende ist; das Material des Rahmens (13) ein Lichttransmissionsmaterial ist.

7. Lichtstruktur (10) nach Anspruch 6, wobei: das Lichttransmissionsmaterial PC oder PMMA ist.

8. Ladesäule, auf der die Lichtstruktur nach einem der Ansprüche 1 bis 7 angeordnet ist.

## Revendications

1. Structure d'éclairage comprenant :
un ensemble d'éclairage (10) comprenant :
au moins une source de lumière (11),
un guide de lumière (12) qui est un élément d'extension flexible et dont au moins une extrémité fait face à l'au moins une source de lumière (11), et la lumière émise par l'au moins une source de lumière étant transmise à l'intérieur du guide de lumière (12) ; et
un corps (20) ; et
un panneau avant (30), **caractérisé en ce que**
l'ensemble d'éclairage comprend en outre un cadre de transmission de la lumière (13) sur lequel l'au moins une source de lumière (11) est supportée, le guide de lumière (12) étant intégré au cadre (13), le cadre (13) définissant un chemin d'extension du guide de lumière (12), et
lorsque le corps (20) et le panneau avant (30) sont montés avec l'ensemble d'éclairage (10), l'ensemble d'éclairage (10) étant situé entre le corps (20) et le panneau avant (30), et le guide de lumière (12) de l'ensemble d'éclairage (10) entourant la périphérie intérieure de la structure d'éclairage.

2. Structure d'éclairage selon la revendication 1, l'ensemble d'éclairage (10) étant en connexion filetée avec le panneau avant (30) ; après que l'ensemble d'éclairage (10) est monté sur le panneau avant (30), le panneau avant (30) étant en connexion par encliquetage avec le corps (20) .

3. Structure d'éclairage selon la revendication 1, le guide de lumière (12) étant agencé autour du bord (131) du cadre (13) et encastré dans le cadre (13).

4. Structure d'éclairage selon la revendication 3, un intérieur du bord (131) du cadre (13) étant doté d'une rainure (132) destinée à recevoir le guide de lumière (12).

5. Structure d'éclairage selon l'une quelconque des revendications 1 à 4, une plaque d'éclairage (133) étant disposée au bas du cadre (13), l'au moins une source de lumière (11) étant disposée sur la plaque d'éclairage (133), chacune des au moins une source de lumière (11) étant alignée avec l'au moins une extrémité du guide de lumière (12).

6. Structure d'éclairage (10) selon la revendication 5, l'au moins une source de lumière (11) étant une source de lumière LED ; le guide de lumière (12) étant un tube guide de lumière avec une extrémité de départ et une extrémité d'arrivée ; le matériau du cadre (13) étant un matériau de transmission de la lumière.

7. Structure d'éclairage (10) selon la revendication 6, le matériau de transmission de la lumière étant du PC ou du PMMA.

8. Pile de charge sur laquelle est disposée la structure d'éclairage selon l'une quelconque des revendications 1 à 7.
